# EUROPEAN PATENT APPLICATION

(11) **EP 4 650 925 A1**
(43) Date of publication of application: **19.11.2025**
(21) Application number: 24773782.8
(22) Date of filing: 18.01.2024
(51) Int. Cl.: G06F 3/04817, G06F 3/04842

(54) **DEVICE CONTROL METHOD AND APPARATUS, WEARABLE DEVICE, READABLE STORAGE MEDIUM, AND CHIP**

(30) Priority: 23.03.2023 CN 202310295362
(71) Applicant: Huawei Technologies Co., Ltd., Shenzhen, Guangdong 518129 (CN)
(72) Inventor: WU, Yu, Shenzhen, Guangdong 518129 (CN); HAN, Yi, Shenzhen, Guangdong 518129 (CN)
(74) Representative: Maiwald GmbH
(86) International application number: PCT/CN2024/073104
(87) International publication number: WO 2024/193213

(57) **Abstract**

Embodiments of this application relate to the field of terminal technologies, and provide a device control method and apparatus, a wearable device, a readable storage medium, and a chip. The method is applied to a wearable device and includes: when displaying a target interface, receiving a first control operation; displaying an operation bar on the target interface in response to the first control operation, where the operation bar includes at least one function control, and the function control includes an application icon and/or an application control of an application; and controlling, in response to a second control operation on a target function control in the operation bar by using the target function control, the wearable device to perform a corresponding function. In the embodiments, a user uses the function control in the operation bar to quickly control the wearable device to implement a target function. The method is not only easy to operate, but also can avoid that the wearable device frequently responds to user operations, thereby reducing power consumption of the device.

## Description

This application claims priority to Chinese Patent Application No. 202310295362.7, filed with the China National Intellectual Property Administration on March 23, 2023 and entitled "DEVICE CONTROL METHOD AND APPARATUS, WEARABLE DEVICE, READABLE STORAGE MEDIUM, AND CHIP", which is incorporated herein by reference in its entirety.

### TECHNICAL FIELD

This application relates to the field of terminal technologies, and in particular, to a device control method and apparatus, a wearable device, a readable storage medium, and a chip.

### BACKGROUND

With development of computer technologies, wearable devices such as smartwatches and smart glasses emerge. Various applications, for example, a health application, a call application, a camera application, an audio application, a video application, and a messaging application, are usually installed in a wearable device. The applications can implement different functions in a running process, for example, a health monitoring function and a call function. However, because a display interface of the wearable device is usually relatively small, application-related information (such as an application icon and an application control) that can be displayed on a same interface is limited. When a user needs to use a function, the user needs to frequently perform operations on the wearable device to find a control that controls implementation of the function, resulting in poor user experience.

### SUMMARY

This application provides a device control method and apparatus, a wearable device, a readable storage medium, and a chip to resolve problems of a complex operation process and poor user experience when a user controls a wearable device in a conventional technology.

To achieve the foregoing objective, this application uses the following technical solutions.

According to a first aspect, an embodiment of this application provides a device control method, applied to a wearable device. The method includes: when displaying a target interface, receiving a first control operation; displaying an operation bar on the target interface in response to the first control operation, where the operation bar includes at least one function control, and the function control includes an application icon and/or an application control of an application; and controlling, in response to a second control operation on a target function control in the operation bar by using the target function control, the wearable device to perform a corresponding function.

According to the method provided in this embodiment of this application, the wearable device can display the operation bar based on a shortcut control operation of a user, and the operation bar includes a function control such as an application icon or an application control, so that the user uses the function control to quickly control the wearable device to implement a target function. The method is not only easy to operate, but also can avoid that the wearable device frequently responds to user operations, thereby reducing power consumption of the device.

In some implementations, displaying the operation bar on the target interface in response to the first control operation includes: displaying, on the target interface, an operation bar corresponding to the target interface in response to the first control operation. According to the method, different types of function controls can be displayed in operation bars on different types of interfaces, so that the user is provided with different quick control modes in different scenarios and has relatively good user experience.

In some implementations, when the target interface is a non-application interface and an operation object of the first control operation is not an application icon, the function control in the operation bar is an application icon. The non-application interface is an interface other than an application interface, and the application interface is a related interface displayed when an application runs in foreground in response to a start operation on the application (for example, tapping an application icon, or bringing the application from background to the foreground through a multitasking list). For example, the application interface includes an audio playback interface displayed in a running process of an audio application in the foreground, or a related interface displayed in a running process of a messaging application in the foreground. The non-application interface includes a home screen, a system settings interface displayed by flicking down on the home screen, a system settings interface displayed by flicking up on the home screen, or the like. According to the method, an application icon can be displayed on a non-application interface, so that the user can start a corresponding application.

In some implementations, when the target interface is a non-application interface and the operation object of the first control operation is an application icon of a target application, the function control in the operation bar is an application icon of an application associated with the target application or is an application control of the target application. According to the method, a core function control of the target application can be displayed, so that a core function of the application is quickly controlled. Alternatively, according to the method, the application associated with the target application can be displayed, so that the user can quickly start the associated application.

In some implementations, when the target interface is an application interface of the target application, the function control in the operation bar is the application control of the target application. According to the method, the core function control of the target application can be displayed, so that the user quickly controls the core function of the application.

In some implementations, the first control operation and the second control operation include: a control operation on a physical button on the wearable device; or a touch operation that is input in the target interface; or a preset voice control operation.

In some implementations, after displaying the operation bar on the target interface in response to the first control operation, and before controlling, in response to the second control operation on the target function control in the operation bar by using the target function control, the wearable device to perform the corresponding function, the method further includes: receiving a switch operation; and replacing the function control in the operation bar with another function control in response to the switch operation. According to the method, the electronic device can be controlled to display different function controls in the operation bar, thereby enriching shortcut control functions and improving user experience.

In some implementations, the switch operation includes: a control operation on a physical button on the wearable device; or a touch operation that is input in the target interface; or an operation on a switch control displayed on the target interface, where the switch control is used to control switching of the function control in the operation bar.

In some implementations, the control operation on the physical button on the wearable device includes a press operation, a turn operation, or a touch operation on the button on the wearable device.

In some implementations, when the operation bar includes a plurality of function controls, the method further includes: moving a display position of the operation bar based on a movement control operation, so that a control object of the physical button on the wearable device is changed from a first function control to a second function control. The method facilitates the user's control over selection of different function controls by using the physical button.

In some implementations, the operation bar is displayed along an edge of a screen of the wearable device, and a curvature of the operation bar is the same as or similar to a curvature of the edge of the screen. The operation bar is aesthetically pleasing and blocks less content of the display interface.

In some implementations, when the screen of the wearable device is circular or elliptical, the operation bar is arc-shaped; or when the screen of the wearable device is rectangular, the operation bar is rectangular.

According to a second aspect, an embodiment of this application provides a device control apparatus, used in a wearable device. The apparatus includes:
a receiving unit, configured to receive a first control operation when a target interface is displayed;
a display unit, configured to display an operation bar on the target interface in response to the first control operation, where the operation bar includes at least one function control, and the function control includes an application icon and/or an application control of an application; and
a control unit, configured to control, in response to a second control operation on a target function control in the operation bar by using the target function control, the wearable device to perform a corresponding function.

According to a third aspect, an embodiment of this application provides a wearable device, including a memory, a processor, and a computer program stored in the memory and capable of running on the processor. When the computer program is executed by the processor, the method shown in the first aspect is implemented.

According to a fourth aspect, an embodiment of this application provides a computer-readable storage medium. The computer-readable storage medium stores a computer program. When the computer program is executed by a processor, the method shown in the first aspect is implemented.

According to a fifth aspect, an embodiment of this application provides a chip. The chip includes a processor and a memory. The memory stores a computer program. When the computer program is executed by the processor, the method shown in the first aspect is implemented.

According to a sixth aspect, an embodiment of this application further provides a computer program product. The program product includes a computer program. When the computer program is run by an electronic device, the electronic device is enabled to implement the method shown in the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a diagram of a structure of a wearable device according to an embodiment of this application;
FIG. 2 is a diagram of a smartwatch according to an embodiment of this application;
FIG. 3 is a diagram illustrating applications installed on a wearable device according to an embodiment of this application;
FIG. 4 is a diagram of a scenario in which a user selects a target application according to an embodiment of this application;
FIG. 5 is a diagram of an application interface of a wearable device according to an embodiment of this application;
FIG. 6 is a flowchart of a device control method according to an embodiment of this application;
FIG. 7 is a flowchart for displaying a shortcut operation bar on a watch face interface according to an embodiment of this application;
FIG. 8 is an interface diagram for displaying a shortcut operation bar on a watch face interface by a smartwatch according to an embodiment of this application;
FIG. 9 is an interface diagram for displaying a shortcut operation bar on a watch face interface by a smartwatch according to another embodiment of this application;
FIG. 10 is a diagram for switching between application combinations in a shortcut operation bar according to an embodiment of this application;
FIG. 11 is a diagram for controlling movement of a position of a shortcut operation bar according to an embodiment of this application;
FIG. 12 and FIG. 13 are diagrams for configuring application icons in a shortcut operation bar according to an embodiment of this application;
FIG. 14 is a diagram for displaying a shortcut operation bar on a launcher interface by a smartwatch according to an embodiment of this application;
FIG. 15 is a flowchart for displaying a shortcut operation bar on a launcher interface according to an embodiment of this application;
FIG. 16 is an interface diagram for displaying a shortcut operation bar on a launcher interface according to an embodiment of this application;
FIG. 17 is a flowchart for displaying a shortcut operation bar on a launcher interface according to another embodiment of this application;
FIG. 18 is an interface diagram for displaying a shortcut operation bar on a launcher interface according to another embodiment of this application;
FIG. 19 is a flowchart for displaying a shortcut operation bar on an application interface according to an embodiment of this application;
FIG. 20 is an interface diagram for displaying a shortcut operation bar on an application interface according to an embodiment of this application;
FIG. 21 is an interface diagram for displaying a shortcut operation bar on an application interface according to another embodiment of this application;
FIG. 22 is a display diagram of a shortcut operation bar according to an embodiment of this application;
FIG. 23 is a display diagram of a shortcut operation bar according to another embodiment of this application;
FIG. 24 is a diagram of a structure of a device management apparatus according to an embodiment of this application; and
FIG. 25 is a diagram of a structure of a chip according to an embodiment of this application.

### DESCRIPTION OF EMBODIMENTS

It should be understood that, in the description of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

In the description of embodiments, the terms "first" and "second" are intended only for description, and shall not be understood as an indication or implication of relative importance or an implicit indication of a quantity of indicated technical features. Therefore, a feature defined by "first" or "second" may explicitly or implicitly include one or more features.

In the description of embodiments, "a plurality of' means at least two, unless otherwise specified. The term "at least one of the following" or an expression similar to the term indicates any combination of the items, including any combination of a single item or a plurality of items. For example, at least one of a, b, or c may represent a, b, c, a and b, a and c, b and c, or a and b and c. Herein, a, b, and c may be singular or plural.

Technical solutions provided in embodiments of this application are described below with reference to accompanying drawings.

With progress and development of science and technology, people gradually use computer technologies to perform intelligent optimization design on daily wearable content (such as watches, glasses, gloves, clothes, shoes, and jewelry), and form various wearable devices, such as smartwatches, smart glasses, smart gloves, smart clothes, smart shoes, and smart jewelry. It may be understood that a wearable device can not only be directly worn on a body, but also implement various functions based on technical support such as software and data interaction, for example, a health monitoring function, a call function, and a music play function.

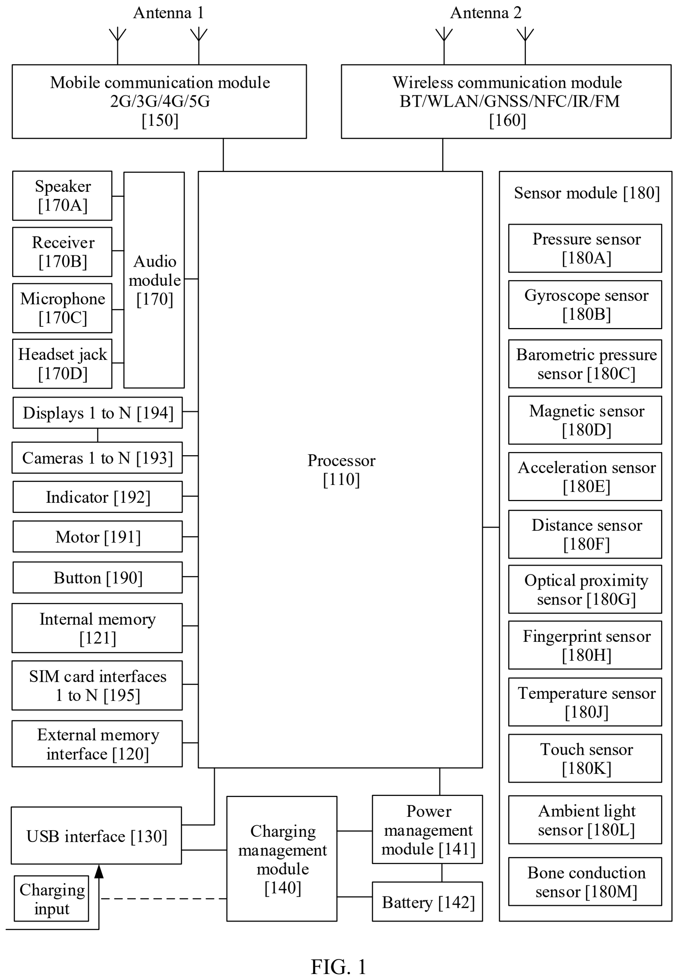

FIG. 1 is a diagram of a structure of a wearable device according to an embodiment of this application. The wearable device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the wearable device. In some other embodiments, the wearable device may include more or fewer components than those shown in the figure, or some components are combined, or some components are split, or component arrangements are different. The components shown in the figure may be implemented by hardware, software, or a combination of software and hardware.

For example, when the wearable device is a smartwatch, the wearable device may include the processor 110, the external memory interface 120, the internal memory 121, the charging management module 140, the power management module 141, the wireless communication module 160, the audio module 170, the speaker 170A, the microphone 170C, and the display 194 shown in the figure.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and the like. Different processing units may be independent components, or may be integrated into one or more processors.

The controller may be a nerve center and a command center of the wearable device. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data used only a short time ago or used cyclically by the processor 110. If the processor 110 needs to use the instruction or the data again, the processor 110 may directly invoke the instruction or the data from the memory. This avoids repeated access and reduces a waiting time of the processor 110, thereby improving system efficiency.

The charging management module 140 is configured to receive a charging input from a charger. The charger may be a wireless charger, or may be a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the wearable device.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance).

A wireless communication function of the wearable device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the wearable device may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the wearable device and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the amplified signal into an electromagnetic wave for radiation by using the antenna 1.

In some embodiments, at least some functional modules in the mobile communication module 150 may be disposed in the processor 110. In some embodiments, at least some functional modules in the mobile communication module 150 and at least some modules in the processor 110 may be disposed in a same component.

The wireless communication module 160 may provide a wireless communication solution that is applied to the wearable device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by using the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 of the wearable device is coupled to the mobile communication module 150, and the antenna 2 is coupled to the wireless communication module 160, so that the wearable device can communicate with a network and another device by using a wireless communication technology.

The wearable device implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the GPUs execute program instructions to generate or change display information.

The display 194 is configured to display an image, a video, and the like, for example, a non-application interface or an application interface in embodiments of this application. The display 194 includes a display panel. In some embodiments, the wearable device may include one or N displays 194, where N is a positive integer greater than 1.

The external memory interface 120 may be configured to connect an external memory card, for example, a micro SD card, to extend a storage capacity of the wearable device. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 performs various function applications and data processing of the wearable device by running the instructions stored in the internal memory 121. The internal memory 121 may include a program storage area and a data storage area. The program storage area may store an operating system, an application (for example, an image display function) required by at least one function, and the like. The data storage area may store data (for example, a user's exercise step count) created during use of the wearable device.

In addition, the internal memory 121 may include a high-speed random access memory, and may further include a non-volatile memory, for example, at least one magnetic disk storage device, a flash memory, or a universal flash storage (universal flash storage, UFS).

The wearable device may implement an audio function by using the audio module 170, the speaker 170A, the receiver 170B, the microphone 170C, the application processor, and the like.

The audio module 170 is configured to convert a digital audio signal into an analog audio signal and output the analog audio signal, and is also configured to convert an analog audio input into a digital audio signal. The audio module 170 may be further configured to encode and decode audio signals.

The speaker 170A, also referred to as a "loudspeaker", is configured to convert an electrical audio signal into a sound signal. The wearable device may be configured to listen to music or answer a hands-free call by using the speaker 170A.

The receiver 170B, also referred to as an "earpiece", is configured to convert an electrical audio signal into a sound signal. When a call is answered or a voice message is received by using the wearable device, the receiver 170B may be put close to a human ear to receive a voice.

The microphone 170C, also referred to as a "mike" or a "mic", is configured to convert a sound signal into an electrical signal. When making a call or sending a voice message, the user may position the mouth close to the microphone 170C and speak, to input a sound signal to the microphone 170C. At least one microphone 170C may be disposed in the wearable device.

The button 190 includes a power button, a settings button, a volume button, and the like. The button 190 may be a mechanical button, or may be a touch button. The wearable device may receive a key input and generate a key signal input related to a user setting and function control of the wearable device.

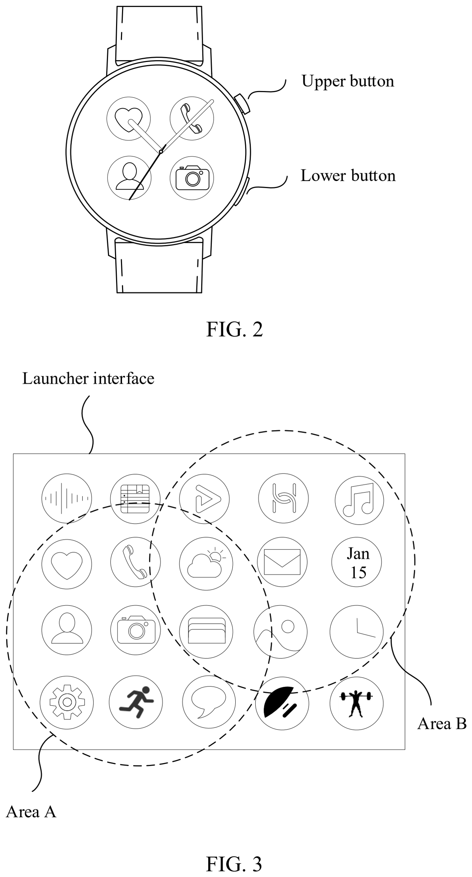

For example, the wearable device is a smartwatch. The button 190 includes an upper button and a lower button shown in FIG. 2. In some implementations, through turning of the upper button, application icons on a checkerboard interface can be zoomed in/out in checkerboard home screen mode, an interface can be scrolled up/down on an application interface, and so on. A display interface in checkerboard home screen mode is also referred to as a launcher interface. The interface includes application icons of all or some applications installed on the smartwatch. The application icons are arranged in a row-column rule, so that the display interface is in a checkerboard shape. Pressing the upper button can turn on the screen when the screen of the smartwatch is off, or an application list interface can be displayed when the smartwatch displays a watch face interface, or the smartwatch can switch back to a watch face interface when displaying a non-watch face interface, and so on. Pressing and holding the upper button can control the smartwatch to power off, power on, restart, and the like. Pressing the lower button can control the smartwatch to start a default/user-defined application or a shortcut operation bar shown below.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also have different vibration feedback effects corresponding to touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect a SIM card. Specifically, the wearable device uses an eSIM, that is, an embedded SIM card. The eSIM card may be embedded in the wearable device, but cannot be separated from the wearable device.

Based on the structural support of the wearable device provided in this embodiment, the wearable device can install various applications, and implement various functions by using these applications, to provide different services for the user. In addition, as storage space of wearable devices increases and users have diversified requirements for device functions, quantities of applications installed on the wearable devices gradually increase, and even up to dozens of applications are installed on some wearable devices (such as smartwatches).

It should be noted that running of all or some applications on the wearable device, or implementation of all or some functions may depend on another smart device (such as a smartphone or a tablet computer), or may not depend on another smart device. This is not limited in this embodiment.

FIG. 3 is a diagram illustrating applications installed on a wearable device according to an embodiment of this application. Referring to FIG. 3, various applications, for example, a health monitoring application, a call application, a contacts application, a calendar application, a camera application, an audio application, a video application, a messaging application, and an instant messaging application, may be installed in the wearable device. The applications can implement different functions in a running process, for example, a health monitoring function, a call function, a photographing function, an audio play function, and a video play function. Details are not described in this embodiment.

For ease of user operations, the wearable device usually displays all application icons of applications on a launcher interface (referring to FIG. 3), and a user can start a corresponding application by performing an operation on an application icon on the launcher interface. However, due to a limitation of a size and a form of the device, a display interface of the wearable device is usually relatively small. Therefore, the wearable device can display only a part of the launcher interface at a same moment, for example, in area A or area B in FIG. 3, and application icons that can be displayed on the same display interface are limited. When the user needs to use and start an application, the user may need to frequently perform operations on the wearable device to find a target function control that controls implementation of the function.

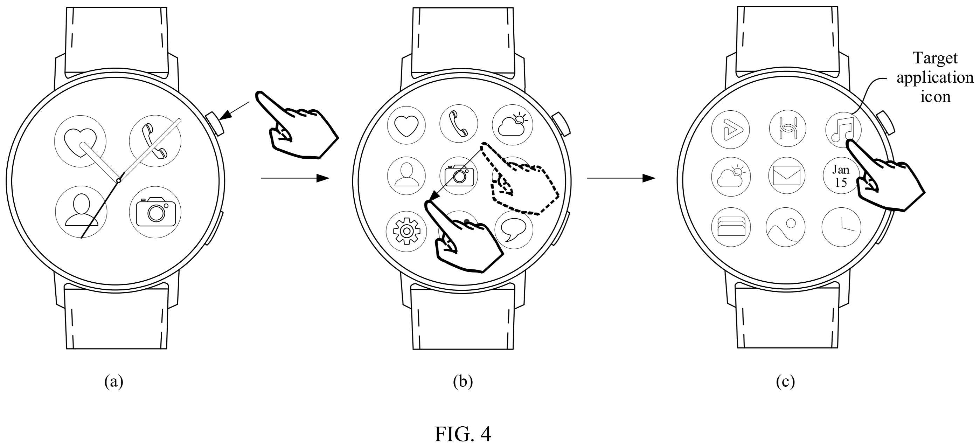

For example, the wearable device is a smartwatch. Referring to (a) to (c) in FIG. 4, when the user needs to play audio by using the smartwatch, the user first needs to press an upper button of the smartwatch, to control the smartwatch to display a default area, for example, area A, on the launcher interface. Because the default area does not include an application icon of the audio application, the user needs to further perform touch sliding on the screen in the up/down/left/right direction to control another area of the launcher interface, for example, area B, where the another area includes the audio application icon on a home screen of the smartwatch. Finally, the user taps the audio application icon, and controls the wearable device to start the audio application to provide an audio playback service.

It should be noted that, in the example in FIG. 4, the user controls the smartwatch to display an icon of a target application by performing only one slide operation on the launcher interface. However, in an actual operation, the user may need to perform sliding in a plurality of directions (up/down/left/right) for a plurality of times to find the icon of the target application, and the user operations are inconvenient.

After the application is started, the wearable device displays an application interface, and implements a corresponding function. However, as application functions gradually increase, the application interface also gradually becomes larger. Similarly, because the display interface of the wearable device is relatively small, the wearable device usually can display only a part of the application interface. When the user needs to control the application, the user usually needs to perform a plurality of operations to find a target application control, and then can use the target control to control the application.

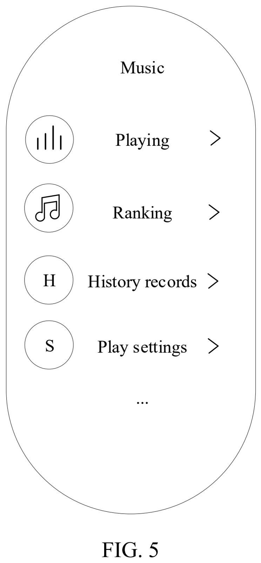

FIG. 5 is a diagram of an application interface of a wearable device according to an embodiment of this application. Referring to FIG. 5, an audio application on a smartwatch is used as an example. The application interface includes a plurality of settings such as a "Playing" option, a "Ranking" option, a "History records" option, and a "Play settings" option. The "Playing" option is used to control playing and pausing of current audio, control switching to a next track, control switching to a next track, and control switching of audio playing modes (such as random mode, single-track loop, and sequential play). The "Ranking" option includes ranking information of popular audio. The "History records" option includes information about recently played audio. The "Play settings" option includes some settings for the audio application.

It may be understood that, for an audio application, controlling playing/pausing of audio, switching to a next track, switching to a next track, and the like are generally core control functions of the audio application. However, because a display interface of the smartwatch is relatively small, in a process of displaying other content of the application, the smartwatch usually cannot display a related core function control at the same time. Consequently, when the user controls a core function of the audio application, operations are complex, and experience is poor.

For example, in a process in which the user opens the "History records" option to view historically played audio, if the user wants to switch the currently played audio to a next track, the user needs to first exit the "History records" option, and then enter the "Playing" option, and tap a "Next" control to switch the currently played audio to the next track. The user operations are inconvenient.

As can be learned from above, due to factors such as a product form and a size, the display interface of the wearable device is usually relatively small, and information (such as an application icon and an application control) that can be displayed on the same display interface is limited. When the user needs to use a function, the user needs to frequently perform operations on the wearable device to find a target function control that controls implementation of the functions. This not only causes poor user experience, but also increases power consumption of the device because the wearable device needs to frequently respond to the user operations.

Therefore, an embodiment of this application provides a device control method. According to the method, a target function control (such as an application icon or an application control) required by a user can be quickly displayed, and user experience can be improved. In addition, it can be avoided that a wearable device frequently responds to user operations, and power consumption of the device can be reduced.

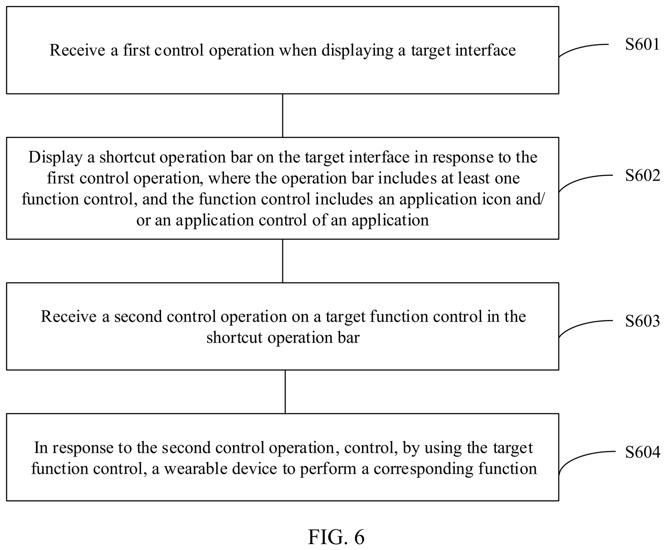

FIG. 6 is a flowchart of a device control method according to an embodiment of this application. The method relates to a process in which a wearable device quickly displays a function control based on a user control operation. The method specifically includes the following S601 to S604.

S601: A wearable device receives a first control operation when displaying a target interface.

In this embodiment, the first control operation is used to control the wearable device to display a shortcut operation bar (operation bar for short) on a current display interface in a floating manner. For example, the first control operation may be a touch operation on a screen, a press or turn operation on a physical button, a voice control instruction, or the like. This is not limited in this embodiment.

S602: The wearable device displays a shortcut operation bar on the target interface in response to the first control operation, where the operation bar includes at least one function control, and the function control includes an application icon and/or an application control of an application.

In this embodiment, display interfaces of the wearable device include application interfaces and non-application interfaces. An application interface is a related interface displayed after an application is started, or an application interface is a related interface displayed when an application runs in foreground in response to an operation performed by a user on an application icon of the application, for example, an audio playback interface of an audio application, a recording interface of a recording application, or a call screen of a call application. It may be understood that the application interface is related to a specific application. The application interface usually varies depending on different applications. A non-application interface is an interface other than the application interface. For example, the non-application interface is a home screen, or a system-level settings interface displayed by the electronic device in response to an operation of sliding from an upper part of the screen of the electronic device to a lower part of the screen of the electronic device by the user, or in response to an operation of sliding from a lower part of the screen of the electronic device to an upper part of the screen of the electronic device by the user. A specific type of the non-application interface is not limited in this embodiment of this application.

In some implementations, a function control in the shortcut operation bar is associated with a type of the target interface. To be specific, when the wearable device displays different types of target interfaces, content in the shortcut operation bar displayed by the wearable device in response to the first control operation of the user is different.

For example, when the wearable device displays a non-application interface, the wearable device receives the first control operation that is input by the user. If an operation object of the first control operation is not an application icon, the wearable device displays a shortcut operation bar on the non-application interface, where a function control in the shortcut operation bar includes at least one application icon. If the operation object of the first control operation is an application icon of a target application, the wearable device displays a shortcut operation bar on the non-application interface, where a function control in the shortcut operation bar includes an icon of at least one application associated with the target application, or includes an application control of the target application.

For another example, when the wearable device displays an application interface of a target application, the wearable device receives the first control operation that is input by the user. The wearable device displays a shortcut operation bar in response to the first control operation, where the shortcut operation bar includes at least one function control of the target application.

In some other implementations, a function control in the shortcut operation bar is irrelevant to a type of the target interface. In other words, regardless of an interface displayed by the wearable device, the wearable device displays a shortcut operation bar with same content in response to the first control operation of the user. A function control in the shortcut operation bar may be an application icon or an application control of an application.

It should be noted that the function control in the shortcut operation bar may be preset by a system, configured by the user, or automatically determined by the wearable device based on a usage habit (such as a use frequency or a use time) of the user on the application. This is not limited in this embodiment.

Optionally, the wearable device may display the shortcut operation bar along an edge of the screen, and a curvature of the shortcut operation bar is the same as or similar to a curvature of the edge of the screen. For example, when the screen of the wearable device is circular or elliptical, the shortcut operation bar is arc-shaped; or when the screen of the wearable device is rectangular, the shortcut operation bar is rectangular.

S603: The wearable device receives a second control operation on a target function control in the shortcut operation bar.

In this embodiment, the second control operation is used to select the target function control. For example, the second control operation may be a touch operation on the screen, a press operation on a physical button, a voice control instruction, or the like. This is not limited in this embodiment.

S604: In response to the second control operation, the wearable device controls, by using the target function control, the wearable device to perform a corresponding function.

In this embodiment, the application icon is used to control starting of the corresponding application, and the application control is used to control the corresponding application to perform a preset function, for example, playing a next track or pausing playing. For example, when the target function control is the audio application, the wearable device starts the audio application in response to the second control operation performed by the user on an audio application icon. Alternatively, when the target function control is a pause control of the audio application, in response to the second control operation performed by the user on the pause control, the wearable device pauses audio currently played by the audio application.

In summary, the wearable device can display the shortcut operation bar based on a shortcut control operation of the user, and the shortcut operation bar includes the function control such as the application icon or the application control, so that the user uses the function control to quickly control the wearable device to implement the target function. The method is not only easy to operate, but also can avoid that the wearable device frequently responds to user operations, thereby reducing power consumption of the device.

Assuming that a wearable device is a smartwatch, the following describes in detail a device control method provided in an embodiment of this application with reference to two specific cases in which a type of a target interface is associated with or not associated with a function control in a shortcut operation bar.

**Case 1: The type of the target interface is associated with the function control in the shortcut operation bar.**

In this embodiment, interfaces of the smartwatch include application interfaces and non-application interfaces. The application interfaces include related interfaces displayed after various applications installed on the smartwatch are started, for example, an audio application interface, a video application interface, and an exercise application interface. The non-application interfaces are interfaces other than the application interfaces, for example, a watch face interface and a home screen. The smartwatch usually displays the watch face interface after being woken up by a user, or displays and keeps the watch face interface always on by default. The watch face interface usually includes time information, and may further include at least one of date information, exercise information, some application icons, and other content. For the watch face interface, refer to (a) in FIG. 4. The home screen, also referred to as a launcher interface, includes application icons of all or some applications installed on the smartwatch. For the home screen, refer to (b) in FIG. 4.

For case 1, the following describes in detail the device control method provided in this application with reference to a manner of displaying a shortcut operation bar on a non-application interface and a manner of displaying a shortcut operation bar on an application interface separately.

### (I) Display the shortcut operation bar on the non-application interface

### (1) Display the shortcut operation bar on the watch face interface

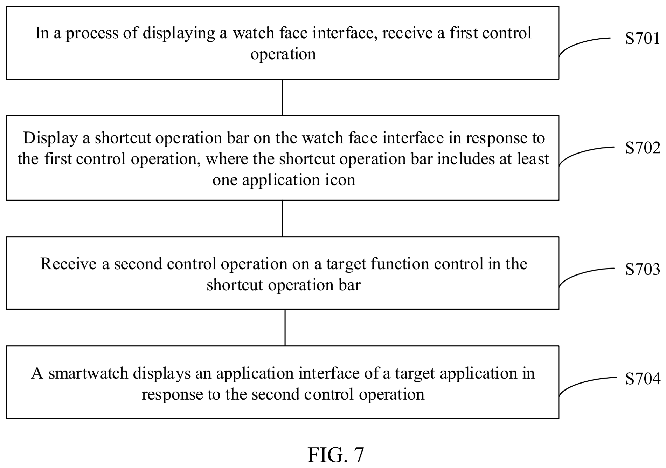

FIG. 7 is a flowchart for displaying a shortcut operation bar on a watch face interface according to an embodiment of this application. The method relates to a process in which a smartwatch displays a shortcut operation bar based on a user operation in a process of displaying a non-application interface.

S701: In a process of displaying a watch face interface, a smartwatch receives a first control operation.

S702: The smartwatch displays a shortcut operation bar on the watch face interface in response to the first control operation, where the shortcut operation bar includes at least one application icon.

In this embodiment, the first control operation may be a press operation performed by the user on a lower button, a press operation or a turn operation performed by the user on an upper button, a touch slide operation that is input by the user on the watch face interface, a voice control instruction input by the user, or the like. A direction shown in the figure is used as an example. For the touch slide operation, a sliding direction of the touch slide operation may be any direction, for example, up, upper right, down, or lower left. This is not limited in this embodiment.

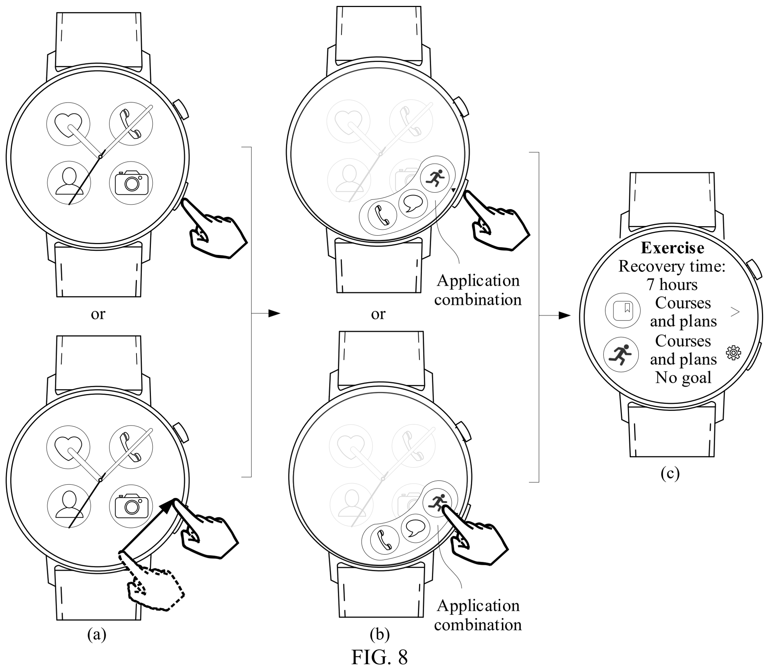

For S701 and S702:
For example, referring to (a) to (c) in FIG. 8, when a watch face of the smartwatch is circular, in response to the first control operation of pressing the lower button or touch-sliding on an edge of a screen toward the upper right by the user, the smartwatch displays an arc-shaped shortcut operation bar at the edge of the watch face, where the shortcut operation bar includes an application icon of an exercise application, a messaging application, or a call application, and a circle center corresponding to the arc-shaped shortcut operation bar basically coincides with a circle center of the watch face. On the circular watch face, the arc-shaped shortcut operation bar is not only aesthetically pleasing and harmonious with an overall shape of the circular watch face, but also can reduce blocking of various content (such as time information and an application icon) in the watch face, thereby providing better user experience.

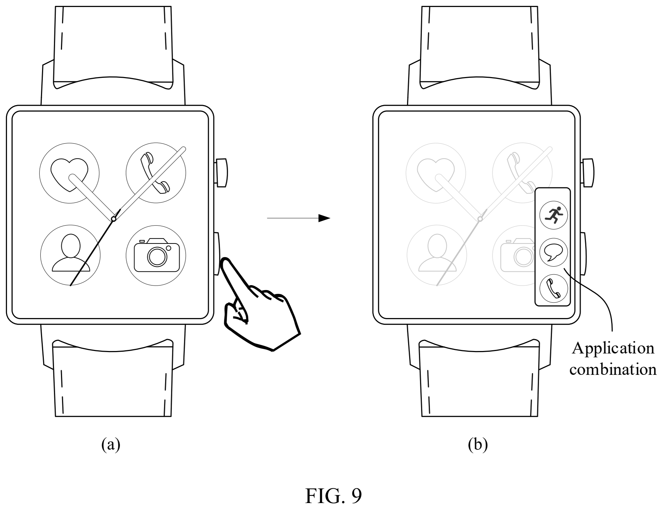

For example, referring to (a) and (b) in FIG. 9, when the watch face of the smartwatch is a square, in response to the first control operation of pressing the lower button by the user, the smartwatch displays a long-strip shortcut operation bar at an edge of the watch face. The shortcut operation bar includes the application icon of the exercise application, the messaging application, or the call application. The shortcut operation bar is parallel to an edge (for example, a right edge) of the square watch face. Similarly, on the square watch face, the long-strip shortcut operation bar also has a feature of being aesthetically pleasing and harmonious with an overall shape of the circular watch face, and can also reduce blocking of various content (such as time information and an application icon) in the watch face, thereby providing better user experience.

For the first control operation on the non-application interface, in some implementations, a plurality of groups of function controls, for example, a plurality of application icon combinations, may be set in the smartwatch. Based on this, in response to the first control operation, the smartwatch may first display a preset application icon combination in the shortcut operation bar, and then display another application combination based on a switch operation that is input by the user. The switch operation may be an operation on a switch control, a preset touch slide operation, a turn operation on the upper button, or the like. This is not limited in this embodiment.

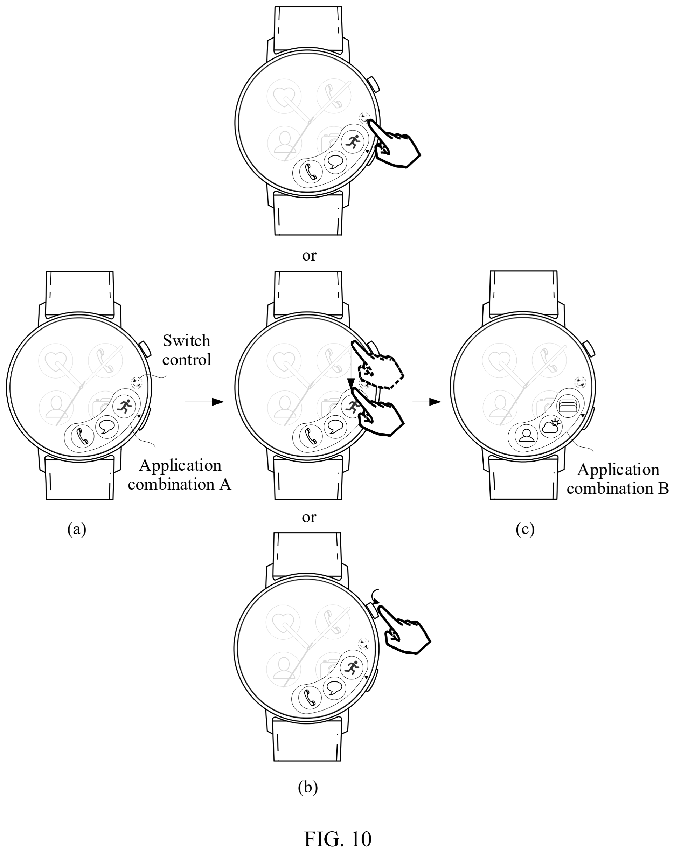

For example, referring to (a) to (c) in FIG. 10, for the first control operation corresponding to the watch face interface, application icon combination A and application icon combination B are set on the smartwatch, and application icon combination A and application icon combination B are completely or partially different. For example, application icons in application icon combination A include icons of the exercise application, the messaging application, and the call application, and application icons in application icon combination B include icons of a wallet application, a weather application, and a contacts application. In response to the first control operation of the user, the smartwatch displays application icon combination A and the switch control on the watch face interface. In response to a tap operation performed by the user on the switch control, a touch slide operation performed on the shortcut operation bar downward, or an operation of turning the upper button downward, the smartwatch switches from application icon combination A to application icon combination B.

It should be noted that, in a process of using the smartwatch, the user may unintentionally trigger the first control operation, and consequently the smartwatch displays the shortcut operation bar. By tapping in another area outside the shortcut operation bar on a display interface, the user may control the smartwatch to cancel displaying of the shortcut operation bar.

S703: The smartwatch receives a second control operation on a target function control in the shortcut operation bar.

S704: The smartwatch displays an application interface of a target application in response to the second control operation.

In this embodiment, the second control operation is used to select the target application, and may be a press operation on the lower button of the smartwatch, a tap operation on an icon of the target application, a voice control instruction, or the like. This is not limited in this embodiment.

For example, the user may select the target application in the following manner 1 or manner 2.

Manner 1: The user selects the target application by tapping the icon of the target application.

For example, referring to (b) and (c) in FIG. 8, when the target application is the exercise application, the user may start the exercise application by tapping the application icon of the exercise application. Alternatively, when the target application is the messaging application, the user may start the messaging application by tapping the icon of the messaging application.

Manner 2: The user selects the target application by pressing the lower button.

It should be noted that, because a position of the lower button on the smartwatch is fixed, but content displayed near the lower button usually changes, the smartwatch usually displays a focus near the lower button, to indicate a target control object of the lower button. The target control object may be the target application, or may be an application control.

When the focus of the lower button points to the target application, the user may select the target application by pressing the lower button. For example, referring to (b) and (c) in FIG. 8, when the target application is the exercise application, and the exercise application is the target application, the user may select the target application by pressing the lower button.

When the focus of the lower button does not point to the target application, the user needs to first move the position of the shortcut operation bar, so that the focus of the lower button points to the target application, and then the user presses the lower button to select the target application.

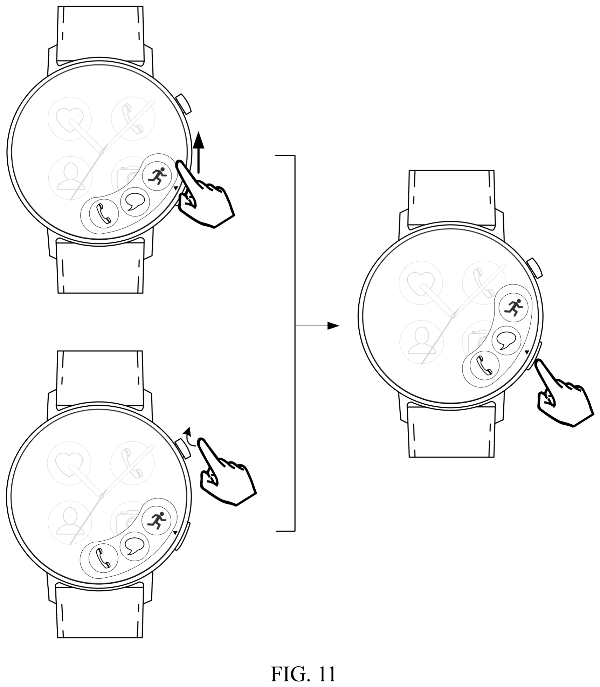

For example, referring to FIG. 11, and assuming that the target application is the messaging application but the focus of the lower button currently points to the exercise application, the user may control, by performing an upward touch slide operation, the shortcut operation bar to move upward, or control, by turning the upper button upward, the shortcut operation bar to move upward, so that the focus of the lower button of the smartwatch points to the messaging application. Then the user selects the messaging application by pressing the lower button.

In this embodiment, the application icon in the shortcut operation bar on the watch face interface may be preconfigured by a system, configured by the user, or determined by the smartwatch based on a usage habit of the user. This is not limited in this embodiment.

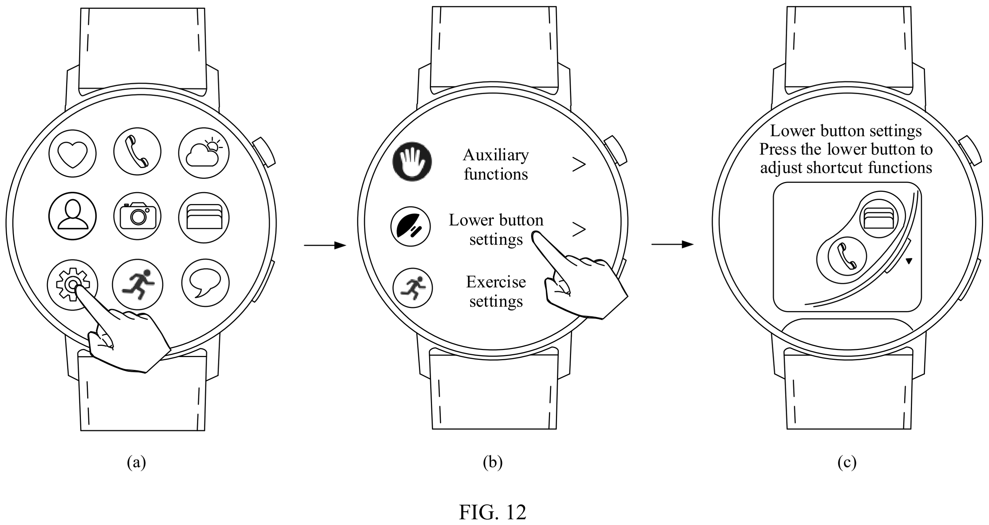

In a scenario in which the user configures an application icon, for example, referring to (a) to (c) in FIG. 12, the smartwatch displays a settings interface in response to an operation performed by the user on a settings application on the smartwatch. The settings interface includes content such as an "Auxiliary functions" control, a "Lower button settings" control, and an "Exercise settings" control. In response to an operation performed by the user on the "Lower button settings" control, the smartwatch displays a lower button settings interface, and the user may edit, on the lower button settings interface, an application icon at each display position in the shortcut operation bar.

Because the watch face interface of the smartwatch is relatively small, and can display only some content of one interface, the user can control, only by performing touch sliding on the display interface, the smartwatch to display remaining content of the interface. For ease of description, the following describes, with reference to the complete lower button settings interface, a process in which the user edits the application icon in the shortcut operation bar.

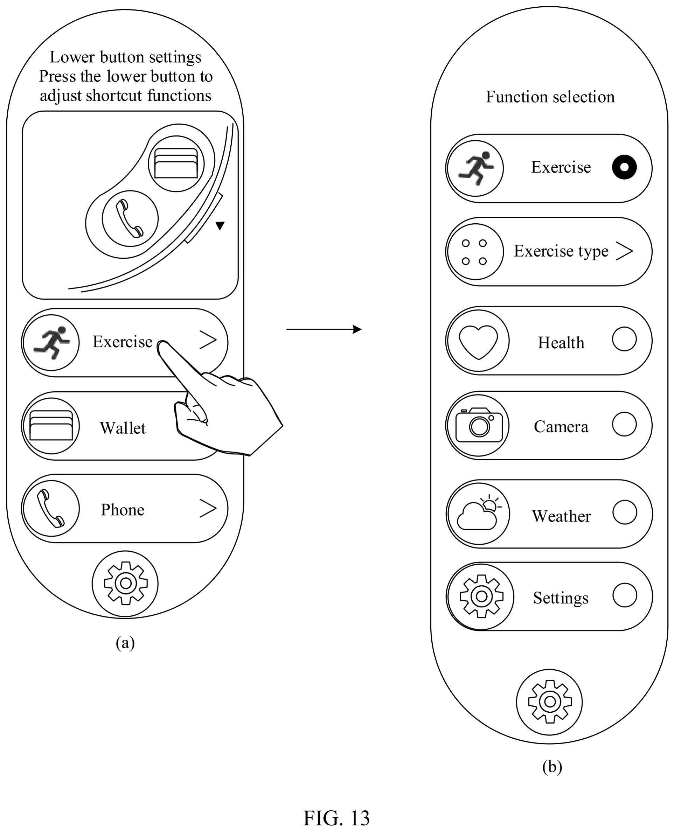

Referring to (a) in FIG. 13, the complete lower button settings interface includes application icons configured in the current shortcut operation bar, for example, application icons of the exercise application, the wallet application, and a phone application. In response to an operation performed by the user on the icon of the target application, the smartwatch displays a function selection interface, where the function selection interface includes a plurality of applications that can be added to the shortcut operation bar, and the user may select, based on a requirement, a new application to replace the target application. For example, in response to an operation performed by the user on the icon of the exercise application, the smartwatch displays a function selection interface shown in (b) in FIG. 13, where the interface includes icons of applications such as the exercise application, exercise type, health, camera, weather, and settings. In response to a selection operation performed by the user on the health application, the smartwatch may replace the icon of the exercise application in the shortcut operation bar with the icon of the health application.

In summary, according to the method provided in this embodiment of this application, the smartwatch can quickly display the shortcut operation bar on the watch face interface based on the control operation of the user, so that the user can quickly find and start the target application. The user operation is simple, and user experience is relatively good. In addition, the smartwatch is further prevented from performing redundant display in a process in which the user searches for the target application, so that power consumption of the device can be reduced.

### (2) Display the shortcut operation bar on the launcher interface

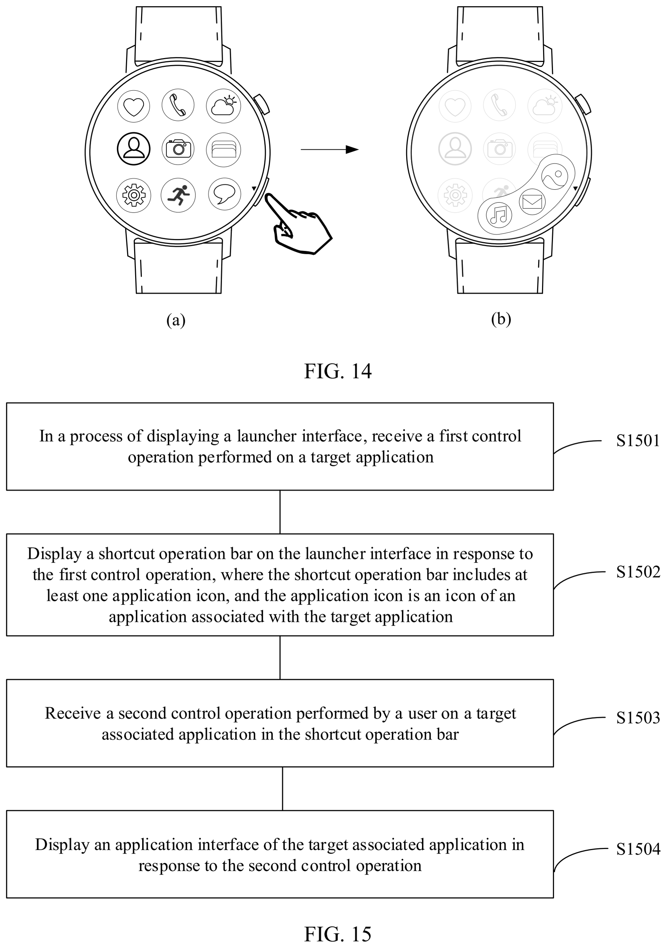

In some implementations, referring to (a) and (b) in FIG. 14, because the launcher interface is also a non-application interface, the smartwatch may also display, by referring to the method shown in FIG. 7, a shortcut operation bar including at least one application icon on the launcher interface, and start a corresponding target application based on a selection operation performed by the user on an icon of the target application in the shortcut operation bar. For details, refer to the foregoing description. Details are not described herein again.

It should be noted that in this implementation, because the launcher interface displayed by the smartwatch includes only some application icons, icons in the shortcut operation bar are usually application icons that are not included in the currently displayed launcher interface, so that the user can quickly find the target application without moving the launcher interface to find the target application. Certainly, the application icons in the shortcut operation bar may also be the same as the application icons on the launcher interface. This is not limited in this embodiment. In addition, the application icon in the shortcut operation bar on the launcher interface may be preconfigured by the system, preset by the user, or determined by the smartwatch based on a usage habit of the user. For details, refer to the foregoing description. Details are not described herein again.

In some other implementations, because the launcher interface includes some application icons, the smartwatch may also display a shortcut operation bar of the target application based on an operation performed by the user on the icon of the target application on the launcher interface. The shortcut operation bar may include an application icon of at least one other application associated with the target application, or at least one application control of the target application. The following separately describes, with reference to specific examples, a process of displaying the shortcut operation bar on the launcher interface.

### Example 1: Display an application associated with the target application in the shortcut operation bar

FIG. 15 is a flowchart for displaying a shortcut operation bar on a launcher interface according to an embodiment of this application. The method includes the following steps S1501 to S1504.

S1501: In a process of displaying a launcher interface, a smartwatch receives a first control operation performed on a target application.

In this embodiment, the first control operation may be an operation of touching and holding to select the target application by a user, and sliding in a direction away from an application icon, where the direction away from the application icon may be the left side, the right side, the upper side, the lower side, or the like of the application icon.

S1502: The smartwatch displays a shortcut operation bar on the launcher interface in response to the first control operation on the target application, where the shortcut operation bar includes at least one application icon, and the application icon is an icon of an application associated with the target application.

In a possible implementation, after receiving the first control operation performed by the user on the target application, the smartwatch searches, based on a preset correspondence, for an application associated with the target application, and displays application icons of all or some associated applications on the launcher interface by using the shortcut operation bar. The shortcut operation bar may be arc-shaped and displayed around an icon of the target application, or certainly may be in another shape, for example, a long strip. This is not limited in this embodiment.

Optionally, the shortcut operation bar further includes a delete control and an add control, where the delete control is used to control the smart device to cancel displaying of the shortcut operation bar, and the add control is used to control to add an application icon to the shortcut operation bar.

S1503: The smartwatch receives a second control operation performed by the user on a target associated application in the shortcut operation bar.

In this embodiment, the second control operation may be an operation of tapping a target application icon by the user, or may be a voice control instruction or the like. For details, refer to the foregoing description. Details are not described herein again.

S1504: The smartwatch displays an application interface of the target associated application in response to the second control operation.

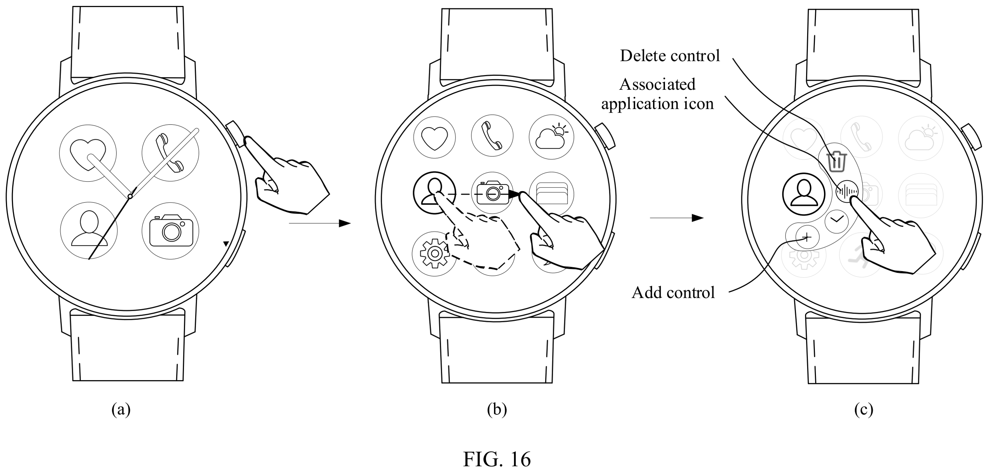

For the method shown in S1501 to S1504, referring to (a) to (c) in FIG. 16, when the target application is a contacts application, and applications associated with the contacts application include a recording application and a clock application, in a process of displaying the launcher interface, the smartwatch displays, on the right side of a contacts application icon on the launcher interface, an arc-shaped shortcut operation bar in response to an operation of touching and holding to select the contacts application icon and sliding to the right side by the user, where the shortcut operation bar includes application icons of the recording application and the clock application, a delete control, and an add control.

In summary, according to the method provided in this embodiment of this application, the smartwatch can quickly display the shortcut operation bar on the launcher interface based on the control operation of the user, so that the user can quickly find and start the target application. The user operation is simple, and user experience is relatively good. In addition, the smartwatch is further prevented from performing redundant display in a process in which the user searches for the target application, so that power consumption of the device can be reduced.

### Example 2: Display an application control of the target application in the shortcut operation bar

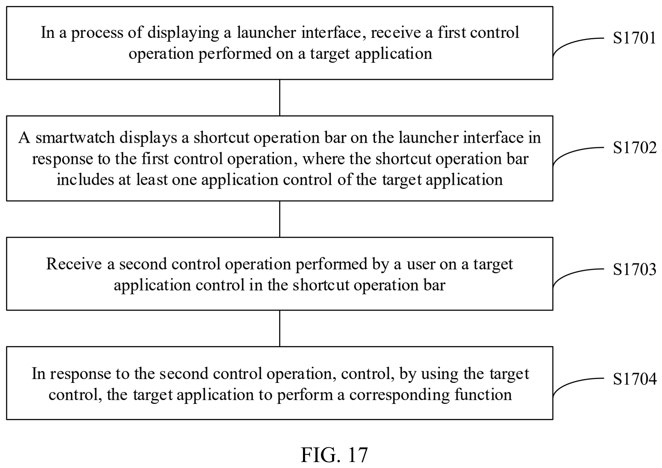

FIG. 17 is a flowchart for displaying a shortcut operation bar on a launcher interface according to another embodiment of this application. The method includes the following steps S1701 to S1704.

S1701: In a process of displaying a launcher interface, a smartwatch receives a first control operation performed on a target application.

In this embodiment, the first control operation may be an operation of touching and holding to select the target application by a user, and sliding in a direction away from an application icon, where the direction away from the application icon may be the left side, the right side, the upper side, the lower side, or the like of the application icon.

S1702: The smartwatch displays a shortcut operation bar on the launcher interface in response to the first control operation, where the shortcut operation bar includes at least one application control of the target application.

In a possible implementation, after receiving the first control operation performed by the user on the target application, the smartwatch searches for a key application control (key control for short) of the target application, and displays the key control on the launcher interface by using the shortcut operation bar. The key control may be configured by an application vendor or the user.

Optionally, the shortcut operation bar further includes an add control and a delete control, where the add control is used to control to add an application control to the shortcut operation bar, and the delete control is used to control the smart device to cancel displaying of the shortcut operation bar. In addition, after displaying the shortcut operation bar, the smartwatch may also cancel displaying of the shortcut operation bar in response to a tap operation or the like performed by the user in an area outside the shortcut operation bar.

Optionally, the shortcut operation bar may be arc-shaped and displayed around an icon of the target application, or certainly may be in another shape, for example, a long strip. This is not limited in this embodiment.

S1703: The smartwatch receives a second control operation performed by the user on a target application control in the shortcut operation bar.

In this embodiment, the second control operation may be an operation of tapping the target application control by the user, or may be a voice control instruction or the like. This is not limited in this embodiment.

S1704: In response to the second control operation, the smartwatch controls, by using the target control, the target application to perform a corresponding function.

It should be understood that, in an application, different application controls are used to control the application to perform different control functions, such as a play function, a pause function, and a fast-forward function. Therefore, the target control operation corresponds to the target control.

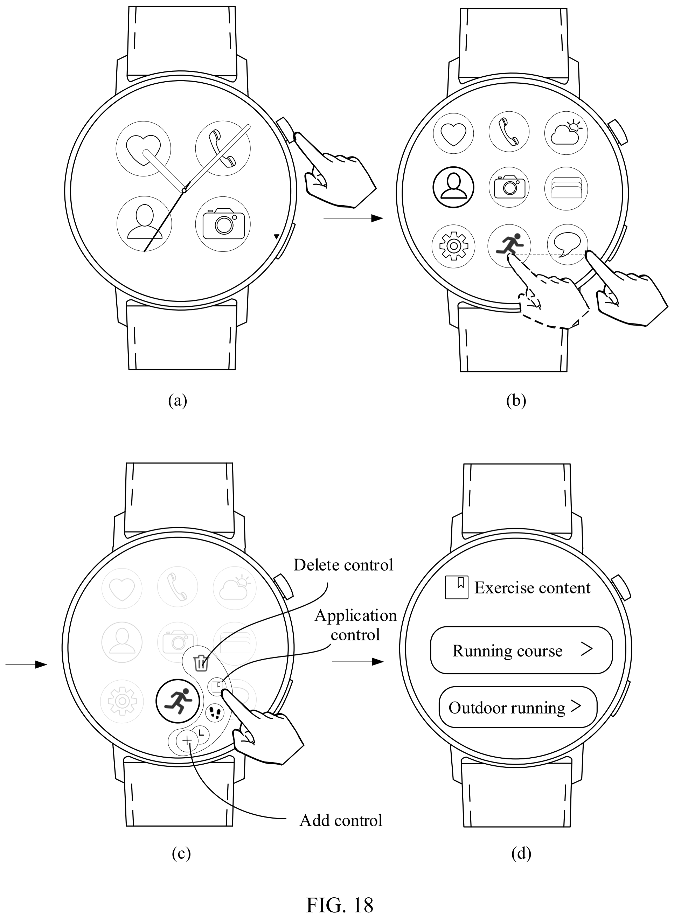

In an example, for the method shown in S1701 to S1704, referring to (a) to (d) in FIG. 18, when displaying the launcher interface, the smartwatch displays, in response to an operation of touching and holding to select an exercise application and sliding to the right side by the user, an arc-shaped shortcut operation bar on the right side of an exercise application icon on the launcher interface, where the shortcut operation bar includes content such as an exercise content control, a step count control, a delete control, and an add control. The exercise content control is used to control the smartwatch to display optional exercise content of the user, and the step count control is used to control the smartwatch to display information about the user's exercise step count. In response to a selection operation performed by the user on the exercise content control, the smartwatch displays exercise content of the user on a current day, for example, a scheduled "running course" or "outdoor running".

In summary, according to the method provided in this embodiment of this application, the smartwatch can quickly display the key control of the target application on the launcher interface based on the control operation of the user, so that the user can quickly control the target application. The user operation is simple, and user experience is relatively good. In addition, the smartwatch is further prevented from performing redundant display in a process in which the user searches for the key control, so that power consumption of the device can be reduced.

### (II) Display the shortcut operation bar on the application interface

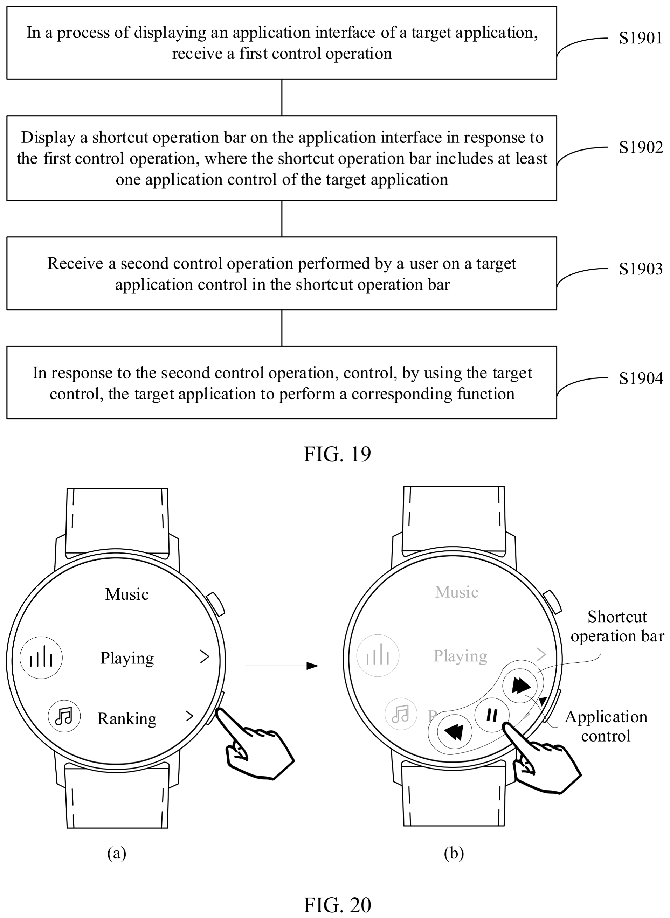

FIG. 19 is a flowchart for displaying a shortcut operation bar on an application interface according to an embodiment of this application. The method includes the following steps S1901 to S1904.

S1901: In a process of displaying an application interface of a target application, a smartwatch receives a first control operation.

It can be learned from the foregoing description that, in response to a selection operation performed by a user on an icon of a target application, a wearable device may start the target application, and display an application interface of the target application. Specific content of the application interface is related to a specific function and configuration of the application. This is not limited in this embodiment.

In this embodiment, the first control operation may be a press operation performed by the user on a lower button, a press operation or a turn operation performed by the user on an upper button, a touch slide operation that is input by the user on a watch face interface, a voice control instruction input by the user, or the like. A direction shown in the figure is used as an example. For the touch slide operation, a sliding direction of the touch slide operation may be any direction, for example, up, upper right, down, or lower left. This is not limited in this embodiment.

S1902: The smartwatch displays a shortcut operation bar on the application interface in response to the first control operation, where the shortcut operation bar includes at least one application control of the target application.

It may be understood that one application usually has a plurality of application controls. For example, application controls of a settings application include a Bluetooth switch, a Wi-Fi switch, a control for controlling a power saving mode, and a control for controlling screen display brightness; and an audio application includes a play/pause control, a next-track control, a previous-track control, a fast-forward 15 seconds control, and a rewind 15 seconds control. Among many controls of an application, there are usually some key controls that control key functions of the application, for example, the Bluetooth switch and the Wi-Fi switch of the settings application, and the play/pause control, the next-track control, and the previous-track control of the audio application.

In some implementations, the smartwatch may display the key control of the target application in the shortcut operation bar, so that the user can quickly control the key function of the application. The key control is usually preset in the application, and the user has no modification permission.

In some other implementations, the smartwatch may display some application controls in the shortcut operation bar based on user settings, so that the user can quickly control the target application in a plurality of modes.

S1903: The smartwatch receives a second control operation performed by the user on a target application control in the shortcut operation bar.

In this embodiment, a selection operation performed by the user on the target application control in the shortcut operation bar may be an operation of tapping the target application control by the user, a voice control instruction, or the like.

S1904: In response to the second control operation, the smartwatch controls, by using the target control, the target application to perform a corresponding function.

The control functions performed by the smartwatch vary depending on different target application controls. For example, when the target application control is the Bluetooth switch, the smartwatch disables/enables a Bluetooth function in response to an operation performed by the user on the Bluetooth switch.

Based on the method shown in S1901 to S1904:
In an example, referring to (a) and (b) in FIG. 20, when the smartwatch displays an application interface of the audio application, in response to a press operation performed by the user on the lower button, the smartwatch displays an arc-shaped shortcut operation bar near the lower button along a contour line of a watch face, where the shortcut operation bar includes key controls of the audio application: the play/pause control, the next-track control, and the previous-track control. In response to an operation of the user on the play/pause control, the smartwatch switches currently played audio from a play state to a pause state.

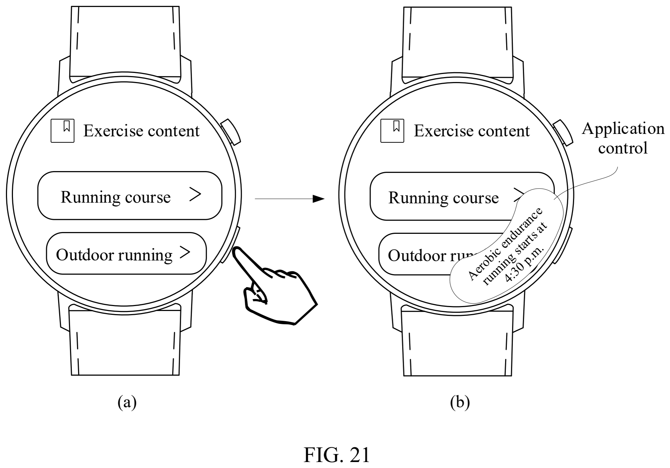

In another example, referring to (a) and (b) in FIG. 21, when the smartwatch displays an application interface of an exercise application, in response to a press operation performed by the user on the lower button, the smartwatch displays an arc-shaped shortcut operation bar near the lower button along the contour line of the watch face, where the shortcut operation bar includes a key control of the exercise application: an exercise prompt control. The exercise prompt control is used to prompt the user of basic information about a scheduled exercise item, such as an item name and an execution time, for example, "Aerobic endurance running starts at 4:30 p.m.".

In summary, according to the method provided in this embodiment of this application, the smartwatch can quickly display the application control of the application on the application interface based on the control operation of the user, so that the user can quickly control the target application. The user operation is simple, and user experience is relatively good. In addition, the smartwatch is further prevented from performing redundant display in a process in which the user searches for the application control, so that power consumption of the device can be reduced.

It should be noted that, for the first control operation on the application interface, in some implementations, a plurality of groups of function controls, for example, a plurality of function control combinations, may also be set in the smartwatch. Based on this, in response to the first control operation, the smartwatch may first display a preset function control combination in the shortcut operation bar, and then display another application combination based on a switch operation that is input by the user. The switch operation may be an operation on a switch control, a preset touch slide operation, a turn operation on the upper button, or the like. This is not limited in this embodiment. For details, refer to the foregoing process of switching a function control combination on a non-application interface. Details are not described herein again.

**Case 2: The type of the target interface is not associated with the function control in the shortcut operation bar.**

In case 2, regardless of whether a currently displayed target interface of the smartwatch is a non-application interface or an application interface, in response to a first control operation, the smartwatch displays, on the target interface, a shortcut operation bar including at least one function control. For details about the first control operation, refer to the foregoing description. Details are not described herein again. The function control may be an application icon or an application control in an application.

In some implementations, the smartwatch is configured to: in response to the first control operation received on the target interface, display, on the target interface regardless of the type of the target interface, a shortcut operation bar including a plurality of application icons.

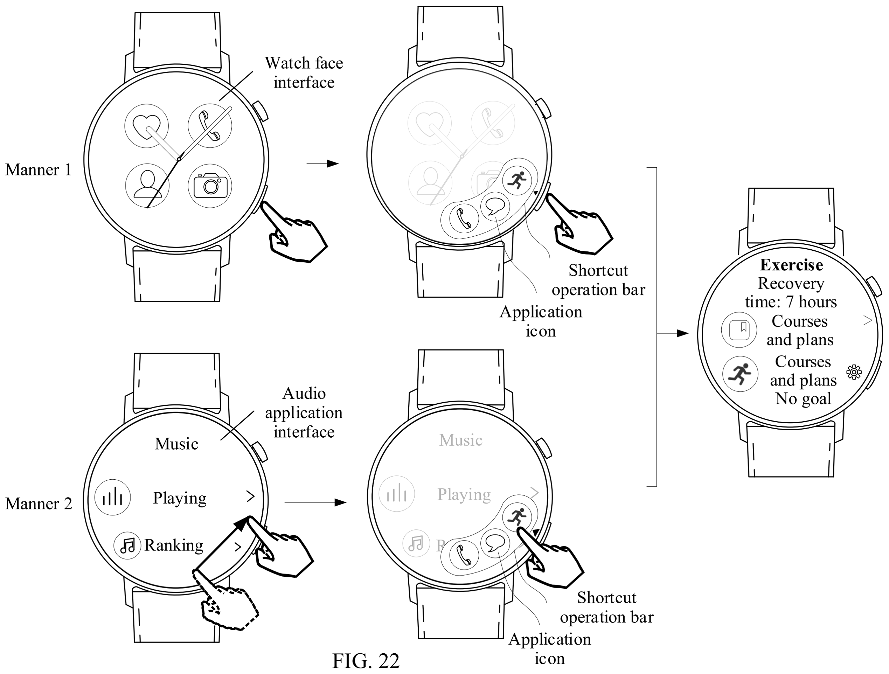

For example, referring to manner 1 in FIG. 22, in a process in which the smartwatch displays a watch face interface (non-application interface), in response to a press operation performed by a user on a lower button, the smartwatch displays an arc-shaped shortcut operation bar on the watch face interface, where the shortcut operation bar includes application icons of an exercise application, a messaging application, and a call application. In response to a second control operation performed by the user on the exercise application, the smartwatch starts the exercise application, and displays an application interface of the exercise application.

For another example, referring to manner 2 in FIG. 22, in a process in which the smartwatch displays an audio application interface, in response to a touch slide operation performed by the user along an edge of the screen toward the upper right, the smartwatch displays a shortcut operation bar on the audio application interface, where the shortcut operation bar includes the application icons of the exercise application, the messaging application, and the call application. In response to the second control operation performed by the user on the exercise application, the smartwatch starts the exercise application, and displays the application interface of the exercise application.

In some other implementations, the smartwatch is configured to: in response to the first control operation received on the target interface, display, on the target interface regardless of the type of the target interface, a shortcut operation bar including a plurality of application controls.

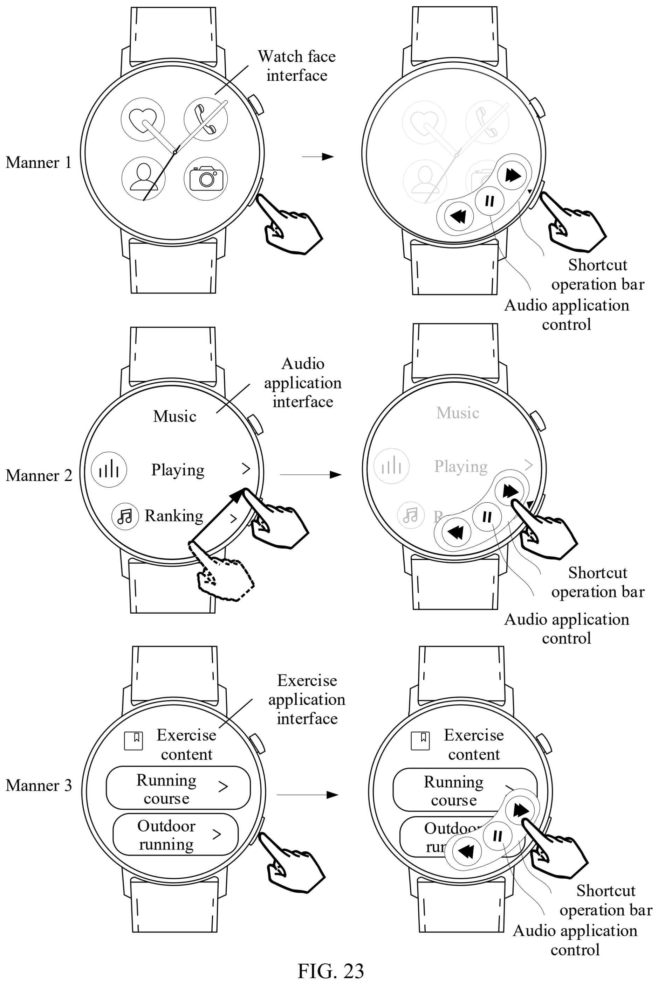

For example, referring to manner 1 in FIG. 23, in a process in which the smartwatch displays the watch face interface, in response to an operation of pressing the lower button by the user, the smartwatch displays a shortcut operation bar on the watch face interface, where the shortcut operation bar includes a previous-track control, a play/pause control, and a next-track control of the audio application. In response to an operation performed by the user on the next-track control, the audio application plays a next track of audio.

For another example, referring to manner 2 in FIG. 23, in a process in which the smartwatch displays the audio application interface, in response to a touch slide operation performed by the user along an edge of the screen toward the upper right, the smartwatch displays a shortcut operation bar on the audio application interface, where the shortcut operation bar includes the previous-track control, the play/pause control, and the next-track control of the audio application. In response to an operation performed by the user on the next-track control, the audio application plays a next track of audio.

For another example, referring to manner 3 in FIG. 23, in a process in which the smartwatch displays the exercise application interface, in response to an operation of pressing the lower button by the user, the smartwatch displays a shortcut operation bar on the exercise application interface, where the shortcut operation bar includes the previous-track control, the play/pause control, and the next-track control of the audio application. In response to an operation performed by the user on the next-track control, the audio application plays a next track of audio.

In summary, according to the method provided in this embodiment, the smartwatch can display the same shortcut operation bar on any interface based on the first control operation of the user, so that the user quickly controls the smartwatch.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Based on a same concept, as an implementation of the foregoing method, an embodiment of this application provides a device management apparatus. The apparatus embodiment corresponds to the foregoing method embodiment. For ease of reading, details in the foregoing method embodiment are not described in the apparatus embodiment. However, it should be clear that the apparatus in this embodiment can correspondingly implement all content of the foregoing method embodiment.

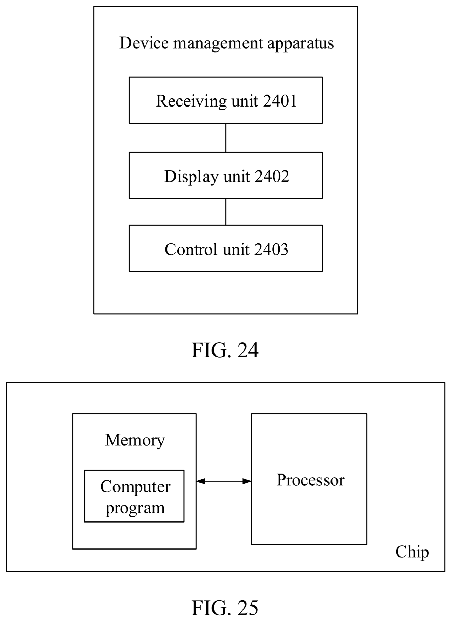

FIG. 24 is a diagram of a structure of a device management apparatus according to an embodiment of this application. The apparatus is used in a wearable device, and specifically includes a receiving unit 2401, a display unit 2402, and a control unit 2403.

The receiving unit 2401 is configured to receive a first control operation when a target interface is displayed.

The display unit 2402 is configured to display a shortcut operation bar on the target interface in response to the first control operation, where the shortcut operation bar includes at least one function control, and the function control includes an application icon and/or an application control of an application.

The control unit 2403 is configured to control, in response to a second control operation on a target function control in the shortcut operation bar by using the target function control, the wearable device to perform a corresponding function.

Optionally, when the target interface is a non-application interface and an operation object of the first control operation is not an application icon, the function control in the operation bar is an application icon; and/or when the target interface is a non-application interface and the operation object of the first control operation is an application icon of a target application, the function control in the operation bar is an application icon of an application associated with the target application or is an application control of the target application; and/or when the target interface is an application interface of the target application, the function control in the operation bar is the application control of the target application.

Optionally, the first control operation and the second control operation include: a control operation on a physical button on the wearable device; or a touch operation that is input in the target interface; or a preset voice control operation.

Optionally, after displaying the operation bar on the target interface in response to the first control operation, and before controlling, in response to the second control operation on the target function control in the operation bar by using the target function control, the wearable device to perform the corresponding function, the control unit 2403 is further configured to: receive a switch operation; and replace the function control in the operation bar with another function control in response to the switch operation. The switch operation includes: a control operation on a physical button on the wearable device; or a touch operation that is input in the target interface; or an operation on a switch control displayed on the target interface, where the switch control is used to control switching of the function control in the operation bar.

Optionally, the control operation on the physical button includes a press operation, a turn operation, a touch operation, or the like on the button.

Optionally, when the operation bar includes a plurality of function controls, the control unit 2403 is further configured to move a display position of the operation bar based on a movement control operation, so that a control object of the physical button on the wearable device is changed from a first function control to a second function control.

Optionally, the operation bar is displayed along an edge of a screen of the wearable device, and a curvature of the operation bar is the same as or similar to a curvature of the edge of the screen. For example, when the screen of the wearable device is circular or elliptical, the operation bar is arc-shaped; or when the screen of the wearable device is rectangular, the operation bar is rectangular.

An embodiment of this application further provides a wearable device. The wearable device includes a memory, a processor, and a computer program stored in the memory and capable of running on the processor. When the computer program is executed by the processor, the device management method shown in the foregoing embodiments is implemented.

An embodiment of this application further provides a chip. Referring to FIG. 25, the chip includes a processor and a memory. The memory stores a computer program. When the computer program is executed by the processor, the device management method in the foregoing embodiments is implemented.

An embodiment of this application further provides a computer-readable storage medium. The computer-readable storage medium stores a computer program. When the computer program is executed by a processor, the device management method provided in the foregoing embodiments is implemented.

An embodiment of this application further provides a computer program product. The program product includes a computer program. When the computer program is run by an electronic device, the electronic device is enabled to implement the device management method provided in the foregoing embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), and an electrically erasable programmable read-only memory (electrically EPROM, EEPROM), or a flash memory. The volatile memory may be a random access memory (random access memory, RAM), which is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

In embodiments provided in this application, division into the frameworks or modules is merely logical function division and may be other division in actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

Persons skilled in the art may clearly understand that, for the purpose of convenient and brief description, for a detailed working process of the foregoing system, apparatus, and unit, refer to a corresponding process in the foregoing method embodiments. Details are not described herein again.

Reference to "an embodiment", "some embodiments", or the like described in this specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily indicate reference to a same embodiment, but mean "one or more but not all embodiments", unless otherwise specially emphasized in another manner. The terms "comprise", "include", "have", and variants thereof all mean "including but not limited to", unless otherwise specially emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A device control method, applied to a wearable device, wherein the method comprises:
when displaying a target interface, receiving a first control operation;
displaying an operation bar on the target interface in response to the first control operation, wherein the operation bar comprises at least one function control, and the function control comprises any one or more of the following: an application icon or an application control of an application; and
controlling, in response to a second control operation on a target function control in the operation bar by using the target function control, the wearable device to perform a corresponding function.

2. The method according to claim 1, wherein displaying the operation bar on the target interface in response to the first control operation comprises:
displaying, on the target interface, an operation bar corresponding to the target interface in response to the first control operation.

3. The method according to claim 2, wherein when the target interface is a non-application interface and an operation object of the first control operation is not an application icon, the function control in the operation bar is an application icon, wherein
the non-application interface is an interface other than an application interface, and the application interface is a related interface displayed when an application runs in foreground in response to a start operation on the application.

4. The method according to claim 2 or 3, wherein when the target interface is a non-application interface and the operation object of the first control operation is an application icon of a target application, the function control in the operation bar is an application icon of an application associated with the target application or is an application control of the target application.

5. The method according to any one of claims 2 to 4, wherein when the target interface is an application interface of the target application, the function control in the operation bar is the application control of the target application.

6. The method according to any one of claims 1 to 5, wherein the first control operation and the second control operation comprise:
a control operation on a physical button on the wearable device; or
a touch operation that is input in the target interface; or
a preset voice control operation.

7. The method according to any one of claims 1 to 6, wherein after displaying the operation bar on the target interface in response to the first control operation, and before controlling, in response to the second control operation on the target function control in the operation bar by using the target function control, the wearable device to perform the corresponding function, the method further comprises:
receiving a switch operation; and
replacing the function control in the operation bar with another function control in response to the switch operation.

8. The method according to claim 7, wherein the switch operation comprises:
a control operation on a physical button on the wearable device; or
a touch operation that is input in the target interface; or
an operation on a switch control displayed on the target interface, wherein the switch control is used to control switching of the function control in the operation bar.

9. The method according to claim 6 or 8, wherein the control operation on the physical button on the wearable device comprises a press operation, a turn operation, or a touch operation on the button on the wearable device.

10. The method according to any one of claims 1 to 9, wherein when the operation bar comprises a plurality of function controls, the method further comprises:
moving a display position of the operation bar based on a movement control operation, so that a control object of the physical button on the wearable device is changed from a first function control to a second function control.

11. The method according to any one of claims 1 to 10, wherein the operation bar is displayed along an edge of a screen of the wearable device, and a curvature of the operation bar is the same as or similar to a curvature of the edge of the screen.

12. The method according to any one of claims 1 to 11, wherein
when the screen of the wearable device is circular or elliptical, the operation bar is arc-shaped; or
when the screen of the wearable device is rectangular, the operation bar is rectangular.

13. A device control apparatus, used in a wearable device, wherein the apparatus comprises:
a receiving unit, configured to receive a first control operation when a target interface is displayed;
a display unit, configured to display an operation bar on the target interface in response to the first control operation, wherein the operation bar comprises at least one function control, and the function control comprises an application icon and/or an application control of an application; and
a control unit, configured to control, in response to a second control operation on a target function control in the operation bar by using the target function control, the wearable device to perform a corresponding function.

14. A wearable device, comprising a memory, a processor, and a computer program stored in the memory and capable of running on the processor, wherein when the computer program is executed by the processor, the method according to any one of claims 1 to 12 is implemented.

15. A computer-readable storage medium, wherein the computer-readable storage medium stores a computer program, and when the computer program is executed by a processor, the method according to any one of claims 1 to 12 is implemented.

16. A chip, wherein the chip comprises a processor and a memory, the memory stores a computer program, and when the computer program is executed by the processor, the method according to any one of claims 1 to 12 is implemented.
